# EUROPEAN PATENT SPECIFICATION

(11) **EP 2 412 475 B1**
(45) Date of publication and mention of the grant of the patent: **03.07.2013**
(21) Application number: 11175817.3
(22) Date of filing: 28.07.2011
(51) Int. Cl.: B23Q 1/01, B23Q 11/00

(54) **Compensation system for a machine tool**
Kompensationsystem für Werkzeugmaschine
Système de compensation pour machine-outil

(30) Priority: 29.07.2010 IT MO20100220
(43) Date of publication of application: 01.02.2012
(73) Proprietor: PAMA S.P.A., 38068 Rovereto (TN) (IT)
(72) Inventor: Nainer, Alberto, 38123 Trento (IT)
(74) Representative: Cicconetti, Andrea

(56) References cited:
- DE-A1- 1 552 217
- FR-A1- 2 686 822

## Description

The present invention relates to machine tools, in particular it refers to a compensation system that is applicable to machine tools of large dimensions of the type of a portal with a crosspiece for compensating torsions of the crosspiece (see, for example, FR-2 686 822).

Known portal machine tools with a crosspiece substantially comprise a crosspiece supported or guided at the ends by two uprights, or columns, that are spaced apart from one another and placed on the sides of a supporting table on which the workpieces are positionable. On the crosspiece an operating head is slidingly mounted by a respective carriage, the operating head is generally provided with a vertical working axis that is perpendicular to the supporting table.

The crosspiece can be fixed or movable; in the latter case it is mounted slidably on linear guides that are fixed to the uprights and is driven vertically by movement members that typically comprise movement screws driven by respective motors.

The operating head is mounted via the carriage on guides of the crosspiece and is movable horizontally along the latter. The operating head and the corresponding carriage constitute a cantilevered load that causes both torsional and flexure stress to the crosspiece. In particular, the torsional stress is due to the distance between the centre of gravity of the carriage-head unit and the longitudinal neutral axis of the crosspiece, on a reference plane that is vertical and orthogonal to the aforesaid neutral axis.

In the case of machine tools of large dimensions in which the weight of the carriage-head unit is very great (typically by one order of magnitude that is greater than the thrusts exerted by the operating head on the workpieces during machining), torsions of the crosspiece are inevitable however stiff the structure of the crosspiece is. The torsion angle is variable in function of the position of the carriage-head unit along the crosspiece, being greatest when said unit is in the centre of the crosspiece (i.e. further from the uprights) and least when it is at the portions of the crosspiece connected to the uprights. The angle of torsion of the crosspiece affects the precision of the machinings as it causes a rotation of the machining axis of the operating head, which is no longer vertical and orthogonal to the supporting table, but tilted. The tilting of the machining axis causes geometrical errors in the machinings performed on the workpieces and operating problems in the tools (for example, drafting problems in the case of milling units). Rotations of the carriage-head unit and thus of the vertical machining axis (on the reference plane vertical and orthogonal to the neutral axis of the crosspiece) are also possible because of errors in the planarity of the guides of the crosspiece along which the carriage slides.

Fixed compensation systems are known that for example provide cables or ropes acting on the crosspiece, which is generally fixed, in such a way as to generate torsion torque that opposes and balances the torsion torque generated by the weight of the carriage-head unit when the latter is positioned in the centre of the crosspiece. The aforesaid systems are not, however, able to compensate satisfactorily for the torsion of the crosspiece when the carriage-head unit is in other positions (for example near the ends of the crosspiece) or when the weight thereof varies in function of the accessory heads applied to the operating head. Further, these systems cannot compensate for possible planarity errors of the guides of the crosspiece.

An object of the present invention is to improve known compensation systems for machine tools of large dimensions of the portal type with a crosspiece, in particular in order to compensate for torsions of the crosspiece caused by the weight of an operating head associated therewith.

Another object is to provide a compensation system that enables torsion of the crosspiece to be minimised and thus rotation of the operating head to be limited, whatever the weight and/or the position of the latter on the crosspiece.

A further object is to obtain a compensation system that enables possible errors of planarity of guides of the crosspiece to be compensated so as to avoid, or at least limit, possible rotations and/or tilting of the operating head.

Still another object is to make a compensation system that enables a tilting of a machining axis of the operating head to be varied and adjusted, such as to optimise the operation of the tools on the workpiece and/or the surface finish thereof.

Another further object is to make a compensation system having a simple and compact structure, reliable operation and which is easily applicable to machine tools, also already existing ones.

These objects and still others are achieved by a system, a method and an apparatus made according to one or more of the claims set out below.

The invention can be better understood and implemented with reference to the attached drawings, which show an embodiment thereof by way of non-limiting example, in which:
Figure 1 is a front view of a machine tool with portal with crosspiece with which the compensation system of the invention is associated;
Figure 2 is a rear schematic view of the machine tool and of the compensation system in Figure 1;
Figure 3 is an enlarged perspective view of the compensation system in Figure 1;
Figure 4 is an enlarged perspective view of the compensation system associated with the crosspiece of the machine tool in Figure 1;
Figure 5 is an enlarged partial section according to line V-V in Figure 2 that illustrates forces and moments acting on the crosspiece of the machine tool, in one operating configuration;
Figures 6 and 7 are schematic side views of the machine tool in Figure 1 in an operating condition with the compensation system respectively activated and non-activated.

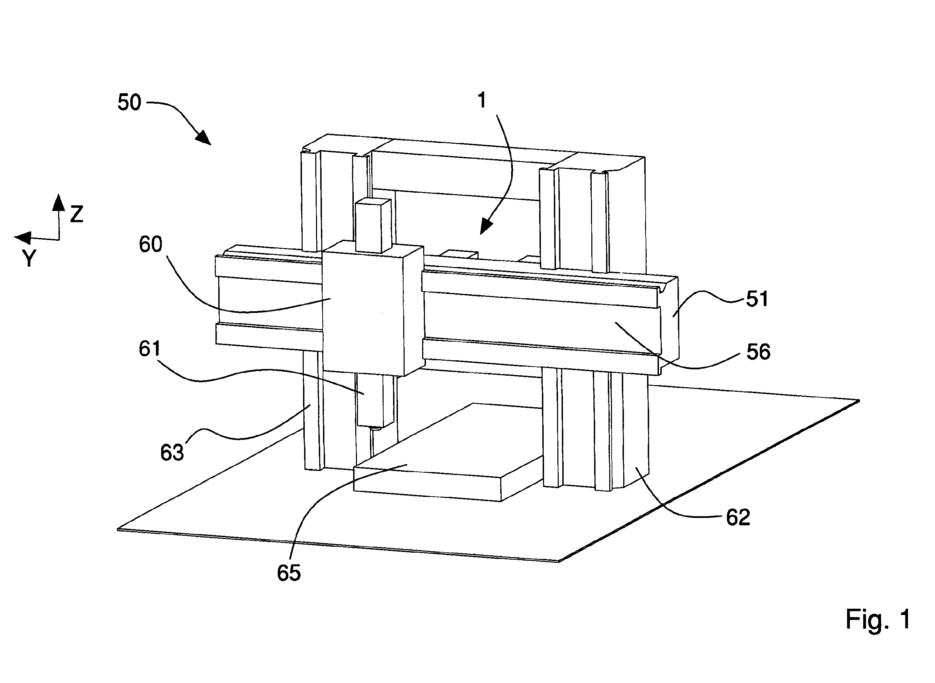

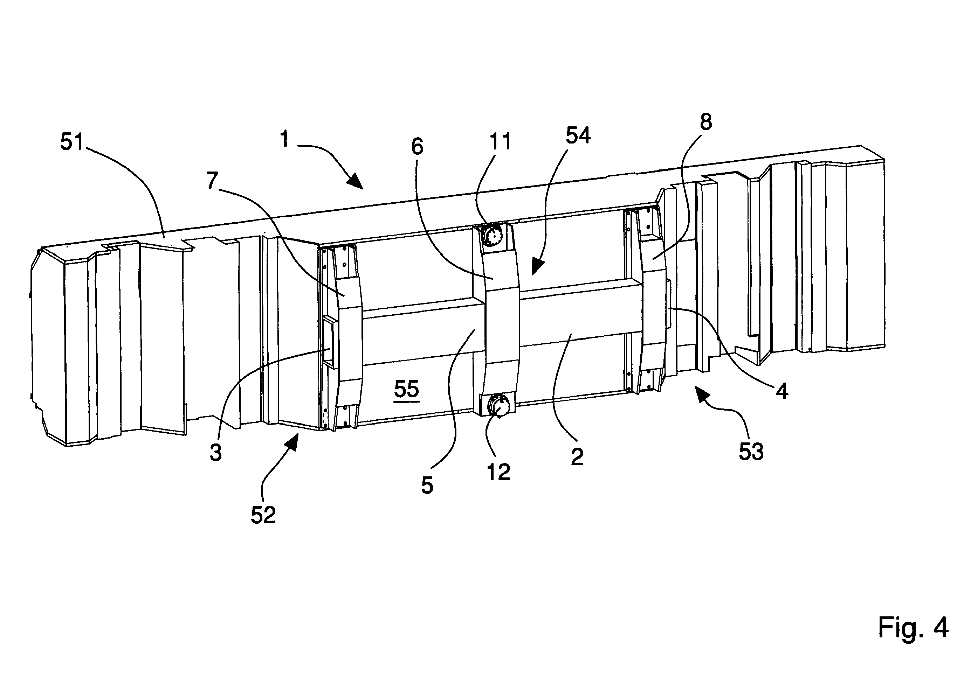

With reference to figures 1 to 7, with 1 there is indicated a balancing system applied to a portal machine tool 50 of large dimensions provided with a crosspiece 51 supported by uprights 62, 63 and slidably supporting an operating head 60 along a first horizontal direction Y. The crosspiece 51 is further movable along a second direction Z that is vertical and orthogonal to the first direction Y on a first upright 62 and a second upright 63, arranged parallel and spaced apart on the sides of a supporting table 65 of the workpieces.

The operating head 60 further comprises an operating part 61 that is movable along a machining axis W that is substantially parallel to the second direction Z.

In a variant of the machine tool 50, which is not illustrated, the crosspiece 51 is fixed stiffly to the uprights.

The crosspiece 51 is moved in the second direction Z by movement means of known type that is not illustrated, inserted inside the uprights 62, 63 and comprising, for example, movement screws driven by respective rotating motors.

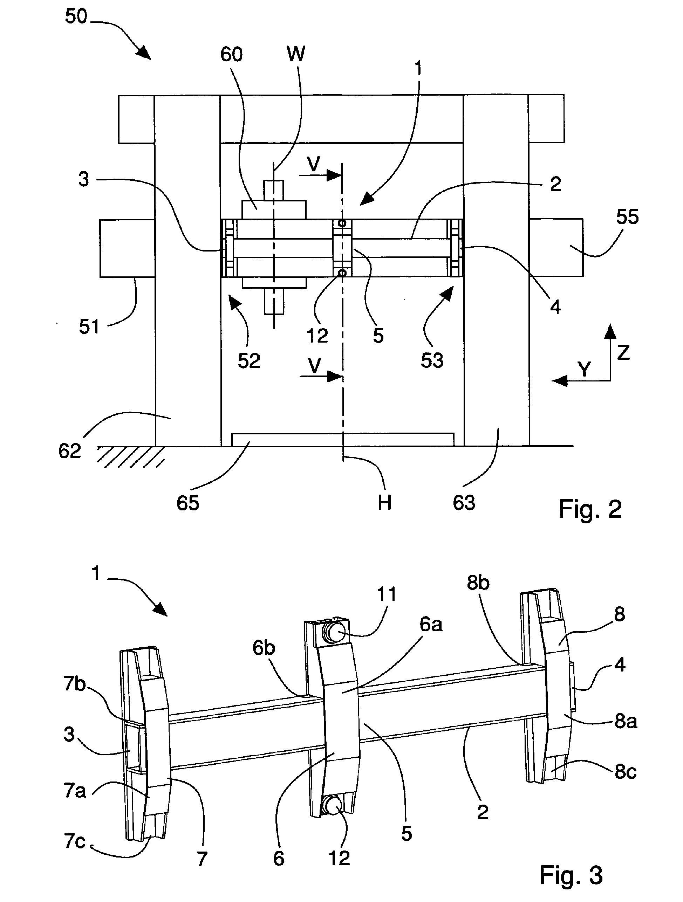

With particular reference to Figures 2, 3 and 4, the balancing system 1 comprises a further crosspiece 2, a so-called counter-crosspiece, having opposite ends 3, 4 fixed to side portions 52, 53 of the crosspiece 51 that are adjacent to the uprights 62, 63. The further crosspiece 2 is further connected to a central portion 54, or middle portion, of the crosspiece 51 by actuating means 11, 12.

The ends 3, 4 of the further crosspiece 2 and the actuating means 11, 12 are connected, in the embodiment illustrated in the figures, to a rear side 55 of the crosspiece 51 that is opposite a front side 56 having guiding means 57, 58 that slidably supports the operating head 60.

In one variant of the machine tool 50, which is not illustrated, the compensation system 1, i.e. the ends 3, 4 and the actuating means 11, 12, can be fixed to an upper side or a lower side of the crosspiece 51, for example substantially orthogonal to said front side 56.

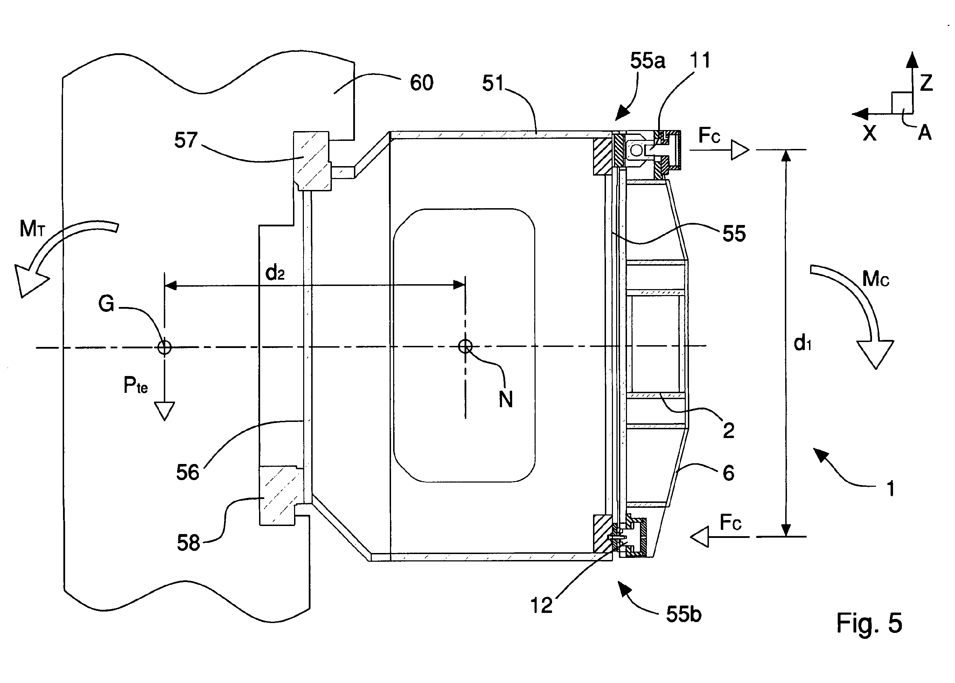

The actuating means 11, 12 is arranged for exerting on the central portion 54 of the crosspiece 51 a pair of compensation forces F_{c} that are adjustable and such as to generate on the crosspiece 51 compensation torque M_{c} that is able to limit and/or control a rotation and/or tilt of said operating head 60 (on a vertical reference plane A that is orthogonal to the first direction Y and parallel to the second direction Z) and more precisely torsional deformation of the crosspiece 51 caused by the weight of the operating head 60 and by a position thereof along said first direction Y, as explained better further on in the description. The compensation forces F_{c} are orthogonal to the first direction Y. In the embodiment illustrated, the compensation forces F_{c} are also parallel to a third direction X that is orthogonal to the first direction Y and to the second direction Z (Figure 5).

The actuating means comprises first actuating means 11 and second actuating means 12 fixed to a median portion 5 of the further crosspiece 2 at a reciprocal first distance d₁ along a direction that is orthogonal to the first direction Y, such as to exert on the crosspiece 51 the pair of compensation forces F_{c} of equal intensity and opposite direction. The compensation forces substantially lie on a vertical plane A that is orthogonal to the first direction Y and parallel to the second direction Z. Said plane A substantially coincides with the centre plane H of the crosspiece 51 when, as in the embodiment illustrated, the first actuating means 11 and the second actuating means 12 are equidistant from the ends 3, 4. The further crosspiece 2 has, for example, closed quadrangular tubular section.

Fixing elements 7, 8 are provided for locking the ends 3, 4 of the further crosspiece 2 on the external portions 52, 53 of the crosspiece 51. Each fixing element 7, 8 comprises a boxed body 7a, 8a of elongated shape, arranged transversely to the further crosspiece 2 and provided with a central through seat 7b, 8b that is suitable for housing and locking the respective ends 3, 4 of the further crosspiece 2. The boxed body 7a, 8a is fixed to the respective external portion 52, 53 of the crosspiece 51 by a fixing plate 7c, 8c that extends of the entire width of the rear side 55.

The fixing plate 7c, 8c is, for example, bolted to the crosspiece 51.

It should be noted that the connecting portions 52, 53 of the crosspiece 51 as they are adjacent to the uprights 62, 63 do not undergo torsional deformation and thus constitute a stiff support to which the compensation system 1 is able to transmit the reaction forces generated by driving of the actuating means 11, 12.

The system further comprises a supporting element 6 fixed to a median portion 5 of said further crosspiece 2 and arranged for housing the actuating means 11, 12.

The supporting element 6 also comprises a respective boxed body 6a arranged transversely to the further crosspiece 2 and provided with a respective through seat 6b that houses and locks the median portion 6.

The supporting element 6 is not fixed to the crosspiece 51 but spaced away from the rear wall 55 thereof, for example by a few centimetres.

To the opposite ends of the supporting element 6 the first actuating means 11 and the second actuating means 12 are respectively fixed that act on the central portion 54 of the crosspiece 51 respectively at an upper part 55a and a lower part 55b of the rear side 55.

The first actuating means 11 and the second actuating means 12 comprise, for example, respective hydraulic cylinders, having in the embodiment illustrated a horizontal axis, i.e. parallel to the third direction X, and being of the single-effect type. The hydraulic cylinders are substantially interposed between the supporting element 6 and the crosspiece 51 and fixed in such a manner as to exert the compensation forces F_{c}. In particular, the hydraulic cylinder of the first actuating means 11 work in traction and tends to move the upper part 55a of the crosspiece 55 towards the supporting element 6, whilst the hydraulic cylinder of the second actuating means 12 works in compression and tends to move the lower part 55b of the crosspiece 55 away from the supporting element 6. The hydraulic cylinders are, for example, of the single-effect type.

The number of hydraulic cylinders of the first actuating means 11 and of the second actuating means 12 can obviously be greater than one, the operation of the compensation system 1 being substantially the same. The hydraulic cylinders can also be of the dual effect type to exert selectively compression or traction forces on the crosspiece 51.

As illustrated in detail in Figure 5, which illustrates a cross section of the crosspiece 51 and of the compensation system 1 along the centre plane H of the crosspiece, the first actuating means 11 and the second actuating means 12 in one operating condition exert on the rear side 55 of the crosspiece 51 at the central portion 54 thereof respective compensation forces F_{c} having equal intensity and an opposite direction in such a manner as to generate on the crosspiece 51 compensation torque M_{c}. In particular, it should be noted that the compensation force F_{c} exerted by the hydraulic cylinder (which works in traction) of the first actuating means 11 on the upper part 54a of the crosspiece 51 and the compensation force F_{c} exerted by the hydraulic cylinder (which works in compression) of the second actuating means 12 on the lower part 54b of the crosspiece 51 are parallel forces, of equal intensity and in an opposite direction, that placed at the first distance d₁ generate compensation torque M_{c} that tends to rotate the crosspiece 51 clockwise with reference to Figure 5.

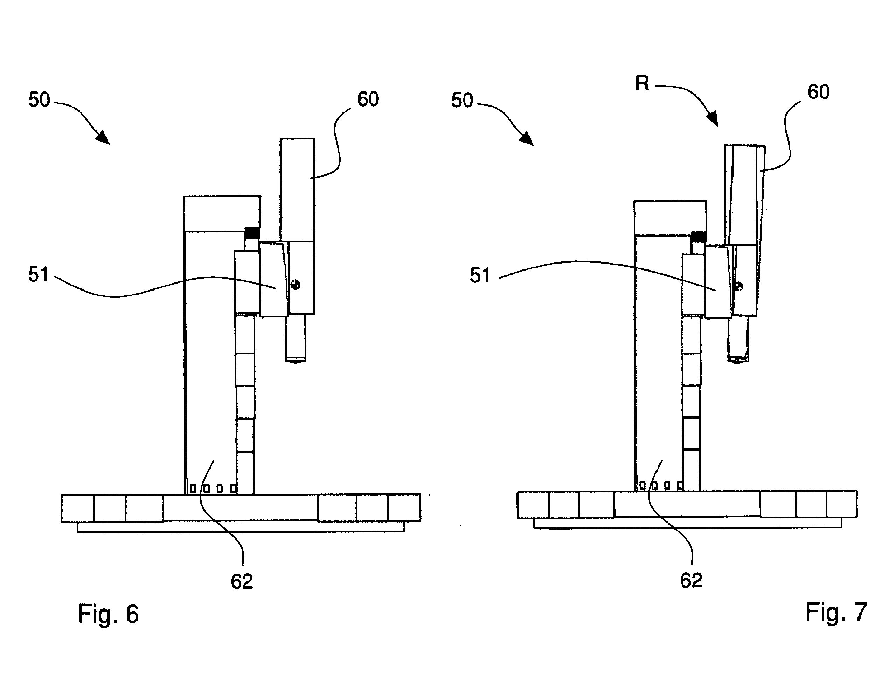

This (clockwise) torsional rotation originating from the compensation torque M_{c} can be effectively used to compensate comparable rotation in an opposite (anticlockwise) direction caused by decentred weight force Fₜₑ of the operating head 60. The centre of gravity G of the latter, as arranged at a second distance d₂ from the neutral longitudinal axis N of the crosspiece 51 (this neutral axis being parallel to the first axis Y in an ideal load-free condition), in fact generates load torque Mₜ that causes at least one rotation of the crosspiece 51 and thus of the operating head 60. As known, following this rotation the machining axis W is no longer parallel to the second direction Z, i.e. orthogonal to the horizontal plane of the supporting table 65. This torsional deformation is illustrated in an accentuated manner in Figure 6, which illustrates the rotation or tilting to which the operating head 60 is subjected following torsion of the crosspiece 51.

The compensation system 1 further comprises controlling means that is of known type and is not illustrated, for example associated with a controlling unit of the machine tool 50, to control the size of the compensation forces F_{c} exerted by the actuating means 11, 12, typically by adjusting the pressure of the fluid that drives the hydraulic cylinders.

In this manner, by suitably programming the controlling means, it is possible to adjust the intensity of the compensation forces F_{c} in function not only of the weight of the operating head 60 and/or of the accessories (accessory heads) mounted thereupon, but also in function of a position thereof along the first direction Y. The torsion of the crosspiece 51 is in fact maximum when the operating head 60 is at the central portion 54 and minimum or nil when the operating head 60 is at the connecting portions 52, 53 of the crosspiece 51, connected to the uprights 62, 63.

In each operating position of the operating head 60 it is thus possible to perform optimal compensation of the torsion of the crosspiece 51 avoiding rotations of the operating head 60 and maintaining the machining axis W vertical. In Figure 7 there is illustrated a possible deformed configuration R (with the operating head 60 that is rotated) that the crosspiece 51 can adopt if the compensation system of the invention is not activated.

It is further possible, owing to the compensation system 1 of the invention, to correct and compensate possible planarity errors of the sliding guides 57, 58 of the operating head 60, generating suitable torsional rotations of the crosspiece 51 in function of the tilting of the machining axis W. Similarly, the compensation system 1 can also be used to vary voluntarily the tilting of the machining axis W and improve the performance of the tools and/or the surface finish of the workpiece. For example, if the operating head 60 comprises a spindle provided with a milling tool, the system 1 can act as an antidrafting system to increase or decrease the tilting of the tool axis (machining axis Z) with respect to the direction orthogonal to the advancement direction so that the blades of the tool are in contact with the workpiece only in the front zone and are slightly detached from the rear zone in order to obtain a better surface finish.

## Claims

1. Compensation system for a machine tool (50) comprising a crosspiece (51) of said machine tool (50) supported by uprights (62, 63) and slidably supporting an operating head (60) along a first direction (Y), **characterised in that** it comprises a further crosspiece (2) having opposite ends (3, 4) fixed to side portions (52, 53) of said crosspiece (51) adjacent to said uprights (62, 63) and connected to a central portion (54) of said crosspiece (51) by actuating means (11, 12), said actuating means (11, 12) being arranged for exerting on said central portion (54) at least a pair of compensation forces (F_{c}) that are adjustable and such as to generate on said crosspiece (51) a compensation torque (M_{c}) that is able to limit and/or control a rotation and/or tilting of said operating head (60), in particular following torsional deformation of said crosspiece (51) caused by the weight of said operating head (60).

2. System according to claim 1, wherein said pair of compensation forces (F_{c}) are adjustable in function of a position of said operating head (60) along said first direction (Y) and/or of a weight of said operating head (60) and of accessories mounted thereupon and/or of planarity errors of guiding means (57, 58) of said crosspiece (51) slidably supporting said operating head (60).

3. System according to claim 1 or 2, wherein said actuating means comprises first actuating means (11) and second actuating means (12) fixed to a middle portion (5) of said further crosspiece (2) at a reciprocal first distance (d₁) along a direction substantially orthogonal to said first direction (Y) so as to exert on said crosspiece (51) said pair of compensation forces (Fc) that are parallel, of equal intensity and in an opposite direction.

4. System according to claim 3, wherein said first actuating means (11) and said second actuating means (12) comprise respective hydraulic cylinders.

5. System according to any preceding claim, wherein said ends (3, 4) of said further crosspiece (2) are fixed to, and said actuating means (11, 12) act on, a rear side (55) of said crosspiece (51), said rear side (55) being opposite a front side (56) having guiding means (57, 58) for slidingly supporting said operating head (60).

6. System according to any preceding claim, wherein said first actuating means (11) exerts on said central portion (54) a respective compensation force (F_{c}) that is suitable for moving said crosspiece (51) towards said further crosspiece (2) and said second actuating means (12) exerts on said central portion (54) a respective compensation force (F_{c}) that is suitable for moving said crosspiece (51) away from said further crosspiece (2).

7. System according to any preceding claim, wherein said compensation forces (F_{c}) substantially rest on a plane (A) that is vertical and substantially orthogonal to said first direction (Y), in particular a central plane (H) of said crosspiece (51).

8. System according to any preceding claim, comprising a supporting element (6) fixed to a middle portion (5) of said further crosspiece (2) and arranged for housing and supporting said actuating means (11, 12).

9. System according to any preceding claim, comprising fixing elements (7, 8) arranged for locking said ends (3, 4) of said further crosspiece (2) to said side portions (52, 53) of said crosspiece (51).

10. System according to claim 9, as appended to claim 8, wherein said further crosspiece (2) has a closed tubular section and said supporting element (6) and said fixing elements (7, 8) comprise respective boxed bodies (6a, 7a, 8a).

11. Portal machine tool (50) provided (with a compensation system (1) according to any preceding claim and) with the crosspiece (51) supported, in a fixed or slidable manner, by uprights (62, 63) and slidably supporting an operating head (60).

## Patentansprüche

1. Kompensationssystem für eine Werkzeugmaschine (50) mit einem Querstück (51) der Werkzeugmaschine (50), das durch Stützen (62, 63) abgestützt ist und einen Arbeitskopf (60) entlang einer ersten Richtung (Y) verschiebbar abstützt, **dadurch gekennzeichnet, dass** es ein weiteres Querstück (2) mit entgegengesetzten Enden (3, 4), die an Seitenabschnitten (52, 53) des Querstücks (51) benachbart zu den Stützen (62, 63) befestigt sind, und das mit einem zentralen Abschnitt (54) des Querstücks (51) durch Betätigungseinrichtungen (11, 12) verbunden ist, umfasst, wobei die Betätigungseinrichtungen (11, 12) zum Ausüben mindestens eines Paars von Kompensationskräften (F_{c}) auf den zentralen Abschnitt (54) angeordnet sind, die einstellbar sind, und um an dem Querstück (51) ein Kompensationsdrehmoment (M_{c}) zu erzeugen, das eine Drehung und/oder Neigung des Arbeitskopf (60) begrenzen und/oder steuern kann, insbesondere nach einer Torsionsverformung des Querstücks (51), die durch das Gewicht des Arbeitskopfs (60) verursacht wird.

2. System nach Anspruch 1, wobei das Paar von Kompensationskräften (F_{c}) als Funktion einer Position des Arbeitskopf (60) entlang der ersten Richtung (Y) und/oder eines Gewichts des Arbeitskopfs (60) und von Zubehörteilen, die daran montiert sind, und/oder von Planaritätsfehlern von Führungseinrichtungen (57, 58) des Querstücks (51), die den Arbeitskopf (60) verschiebbar abstützen, einstellbar sind.

3. System nach Anspruch 1 oder 2, wobei die Betätigungseinrichtungen eine erste Betätigungseinrichtung (11) und eine zweite Betätigungseinrichtung (12) umfassen, die an einem Mittelabschnitt (5) des weiteren Querstücks (2) in einem reziproken ersten Abstand (d₁) entlang einer zur ersten Richtung (Y) im Wesentlichen senkrechten Richtung befestigt sind, um auf das Querstück (51) das Paar von Kompensationskräften (Fc) auszuüben, die parallel sind, die gleiche Intensität aufweisen und in einer entgegengesetzten Richtung liegen.

4. System nach Anspruch 3, wobei die erste Betätigungseinrichtung (11) und die zweite Betätigungseinrichtung (12) jeweilige Hydraulikzylinder umfassen.

5. System nach einem vorangehenden Anspruch, wobei die Enden (3, 4) des weiteren Querstücks (2) an einer Rückseite (55) des Querstücks (51) befestigt sind und die Betätigungseinrichtungen (11, 12) darauf einwirken, wobei die Rückseite (55) zu einer Vorderseite (56) mit Führungseinrichtungen (57, 58) zum verschiebbaren Abstützen des Arbeitskopfs (60) entgegengesetzt ist.

6. System nach einem vorangehenden Anspruch, wobei die erste Betätigungseinrichtung (11) auf den zentralen Abschnitt (54) eine jeweilige Kompensationskraft (F_{c}) ausübt, die zum Bewegen des Querstücks (51) in Richtung des weiteren Querstücks (2) geeignet ist, und die zweite Betätigungseinrichtung (12) auf den zentralen Abschnitt (54) eine jeweilige Kompensationskraft (F_{c}) ausübt, die zum Bewegen des Querstücks (51) weg vom weiteren Querstück (2) geeignet ist.

7. System nach einem vorangehenden Anspruch, wobei die Kompensationskräfte (F_{c}) im Wesentlichen in einer Ebene (A), die vertikal und zur ersten Richtung (Y) im Wesentlichen senkrecht ist, insbesondere einer zentralen Ebene (H) des Querstücks (51) liegen.

8. System nach einem vorangehenden Anspruch mit einem Stützelement (6), das an einem Mittelabschnitt (5) des weiteren Querstücks (2) befestigt ist und zum Aufnehmen und Abstützen der Betätigungseinrichtungen (11, 12) angeordnet ist.

9. System nach einem vorangehenden Anspruch mit Befestigungselementen (7, 8), die zum Verriegeln der Enden (3, 4) des weiteren Querstücks (2) an den Seitenabschnitten (52, 53) des Querstücks (51) angeordnet sind.

10. System nach Anspruch 9, wenn an Anspruch 8 angehängt, wobei das weitere Querstück (2) einen geschlossenen röhrenförmigen Querschnitt aufweist und das Stützelement (6) und die Befestigungselemente (7, 8) jeweilige kastenartige Körper (6a, 7a, 8a) umfassen.

11. Portalwerkzeugmaschine (50), die mit einem Kompensationssystem (1) nach einem vorangehenden Anspruch und mit dem Querstück (51) versehen ist, das in einer festen oder verschiebbaren Weise durch Stützen (62, 63) abgestützt ist und einen Arbeitskopf (60) verschiebbar abstützt.

## Revendications

1. Système de compensation pour une machine-outil (50) comprenant une traverse (51) de ladite machine-outil (50) supportée par des montants (62, 63) et supportant de manière coulissante, dans une première direction (Y), une tête de travail (60), ***caractérisé en ce qu'**il* comprend une autre traverse (2) ayant des extrémités opposées (3, 4) fixées à des portions latérales (52, 53) de ladite traverse (51) adjacentes auxdits montants (62, 63) et raccordées à une portion centrale (54) de ladite traverse (51) par des moyens d'actionnement (11, 12), lesdits moyens d'actionnement (11, 12) étant ménagés pour exercer sur ladite portion centrale (54) au moins deux forces de compensation (F_{c}) qui sont réglables et propres à générer sur ladite traverse (51) un couple de compensation (M_{c}) qui est apte à limiter et/ou contrôler une rotation et/ou une inclinaison de ladite tête de travail (60), en particulier à la suite d'une déformation par torsion de ladite traverse (51) provoquée par le poids de ladite tête de travail (60).

2. Système selon la revendication 1, dans lequel lesdites deux forces de compensation (F_{c}) sont réglables en fonction d'une position de ladite tête de travail (60) le long de ladite première direction (Y) et/ou d'un poids de ladite tête de travail (60) et d'accessoires montés sur elle et/ou d'erreurs de planéité de moyens de guidage (57, 58) de ladite traverse (51) supportant de manière coulissante ladite tête de travail (60).

3. Système selon la revendication 1 ou 2, dans lequel lesdits moyens d'actionnement comprennent des premiers moyens d'actionnement (11) et des deuxièmes moyens d'actionnement (12) fixés à une portion médiane (5) de ladite autre traverse (2) à une première distance réciproque (d₁) le long d'une direction essentiellement orthogonale à ladite première direction (Y) afin d'exercer sur ladite traverse (51) lesdites deux forces de compensation (F_{c}) qui sont parallèles, d'égale intensité et dans une direction opposée.

4. Système selon la revendication 3, dans lequel lesdits premiers moyens d'actionnement (11) et lesdits deuxièmes moyens d'actionnement (12) comprennent des vérins hydrauliques respectifs.

5. Système selon l'une quelconque des revendications précédentes, dans lequel lesdites extrémités (3, 4) de ladite autre traverse (2) sont fixées à, et lesdits moyens d'actionnement (11, 12) agissent sur, un côté arrière (55) de ladite traverse (51), ledit côté arrière (55) étant opposé à un côté avant (56) muni de moyens de guidage (57, 58) pour supporter de manière coulissante ladite tête de travail (60).

6. Système selon l'une quelconque des revendications précédentes, dans lequel lesdits premiers moyens d'actionnement (11) exercent sur ladite portion centrale (54) une force de compensation respective (F_{c}) qui est apte à déplacer ladite traverse (51) en direction de ladite autre traverse (2), et lesdits deuxièmes moyens d'actionnement (12) exercent sur ladite portion centrale (54) une force de compensation respective (F_{c}) qui est apte à éloigner ladite traverse (51) de ladite autre traverse (2).

7. Système selon l'une quelconque des revendications précédentes, dans lequel lesdites forces de compensation (F_{c}) se trouvent essentiellement sur un plan (A) qui est vertical et essentiellement orthogonal à ladite première direction (Y), en particulier sur un plan central (H) de ladite traverse (51).

8. Système selon l'une quelconque des revendications précédentes, comprenant un élément de support (6) fixé à une portion médiane (5) de ladite autre traverse (2) et agencés pour abriter et supporter lesdits moyens d'actionnement (11, 12).

9. Système selon l'une quelconque des revendications précédentes, comprenant des éléments de fixation (7, 8) agencés pour bloquer lesdites extrémités (3, 4) de ladite autre traverse (2) avec lesdites portions latérales (52, 53) de ladite traverse (51).

10. Système selon la revendication 9, lorsqu'elle est dépendante de la revendication 8, dans lequel ladite autre traverse (2) présente une section tubulaire fermée et ledit élément de support (6) et lesdits éléments de fixation (7, 8) comprennent des corps emboîtants respectifs (6a, 7a, 8a).

11. Machine-outil (50) à portique pourvue d'un système de compensation (1) selon l'une quelconque des revendications précédentes, et de la traverse (51) supportée, d'une manière fixe ou coulissante, par des montants (62, 63) et supportant de manière coulissante une tête de travail (60).
